# EUROPEAN PATENT APPLICATION

(11) **EP 1 857 346 A2**
(43) Date of publication of application: **21.11.2007**
(21) Application number: 07008748.1
(22) Date of filing: 30.04.2007
(51) Int. Cl.: B62D 1/184

(54) **Tilt-type steering apparatus equipped with radial fixed gear**

(30) Priority: 19.05.2006 KR 20060045144
(71) Applicant: Mando Corporation, Poseung-myeon Pyeongtaek-si, Gyeonggu-do (KR)
(72) Inventor: Park, Jung Sik, Wonju-si Gangwon-do (KR)
(74) Representative: Winkler, Andreas Fritz Ernst

(57) **Abstract**

A tilt-type steering apparatus equipped with a radial fixed gear includes a column housing (103) enclosing a steering shaft (101); a mounting bracket (201) formed on a side of the column housing (103); a tilt shaft (203) formed on the column housing (103); a fixed gear (205) formed on an outer peripheral surface of the mounting bracket (201), the fixed gear (205) being radially formed around the tilt shaft (203); an adjustment bolt (207) extending through the mounting bracket (201) and the fixed gear (205); a tilt bracket (209) coupled to the tilt shaft (203) and to the adjustment bolt (207), respectively; a movable gear (211) meshing with the fixed gear (205), the movable gear (211) being coupled to an end of the adjustment bolt (207); an adjustment lever formed on a different end of the adjustment bolt (207); and a cam driven according to operation of the adjustment bolt. The reduced number of components improves the convenience of assembly and maintains rigidity, even after assembly.

## Description

### Field of the invention

The present invention relates to a tilt-type steering apparatus equipped with a radial fixed gear. More particularly, the present invention relates to a tilt-type steering apparatus having a fixed gear radially formed around a tilt shaft and a movable gear adapted to mesh with the fixed gear so that the resulting decrease in the number of components improves the convenience of assembly and the rigidity of the apparatus.

### BACKGROUND OF THE INVENTION

As generally known in the art, the steering apparatus of an automobile is used to vary the direction of movement of the automobile as desired by the driver. Particularly, the steering apparatus modifies the center of rotation of the front wheels of the automobile so that it moves in the desired direction.

When the driver operates the steering wheel, the resulting steering force is transmitted to a rack-pinion mechanism via a steering shaft, and eventually changes the direction of both wheels.

Steering apparatuses for automobiles include telescope-type apparatuses incorporating a telescope function and tilt-type apparatuses incorporating a tilt function. Such a function enables the driver to adjust the degree of protrusion of the steering wheel or its tilt angle according to his/her body size so that proper steering operations are ensured.

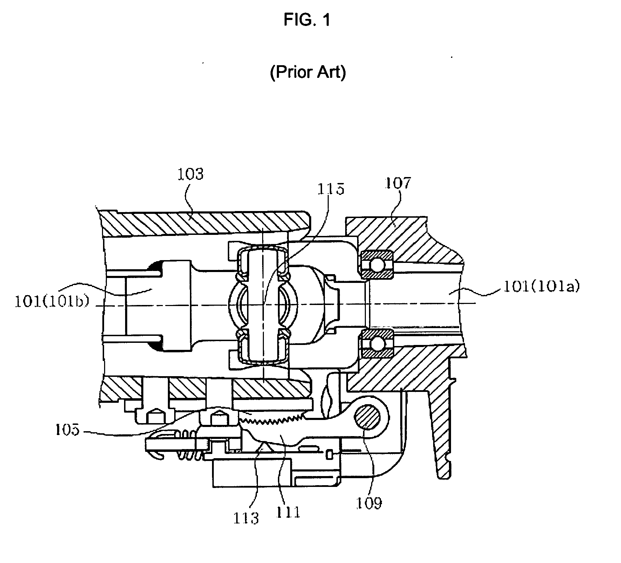

FIG. 1 is a partial longitudinal sectional view of a tilt-type steering apparatus according to the prior art.

As shown in FIG. 1, the conventional tilt-type steering apparatus includes a steering shaft 101 connected to a steering wheel (not shown); a column housing 103 enclosing the steering shaft 101; a fixed gear 105 formed on the bottom surface of the column housing 103; a tilt bracket 107 rotatably coupled to the rear end of the column housing 103; a movable gear 111 rotatably coupled to the tilt bracket 107 via a movable gear hinge 109 while meshing with the fixed gear 105; and a locking member 113 positioned on the bottom surface of the movable gear 111.

The steering shaft 101 is divided into upper and lower shafts 101a and 101b by a universal joint 115. The upper and lower shafts 101a and 101b are contained in the tilt bracket 107 and the column housing 103, respectively.

The center of rotation of the upper shaft 101a and the tilt bracket 107 coincides with that of the universal joint 115. This means that, during a tilt operation by the user, the upper shaft 101a and the tilt bracket 107 rotate along concentric circles.

The fixed gear 105 is positioned on the bottom surface of the column housing 103, and has the shape of an arc having the center of rotation of the universal joint 115 as its center.

The movable gear 111 meshes with the fixed gear 105, and is rotatably coupled to the tilt bracket 107 via the movable gear hinge 109. Particularly, when the movable gear 111 rotates counterclockwise by a predetermined angle about the movable gear hinge 109, the movable gear 111 disengages from the fixed gear 105 and enables tilt adjustment. After the tilt adjustment is over, the movable gear 111 rotates clockwise and meshes with the fixed gear 105 again. In this case, the locking member 113 beneath the movable gear 111 is forced against the movable gear 111 so that the fixed and movable gears 105 and 111 remain meshed with each other in a stable manner.

However, the conventional tilt-type steering apparatus has a problem in that the increased number of components, including the locking member and the gear hinge, degrades the convenience of assembly.

Furthermore, use of various components makes it difficult to adjust the tolerance between them and degrades the rigidity even after they are assembled.

### SUMMARY OF THE INVENTION

Accordingly, the present invention has been made to solve the above-mentioned problems occurring in the prior art, and the present invention provides a tilt-type steering apparatus having a fixed gear radially formed around a tilt shaft and a movable gear adapted to mesh with the fixed gear so that the resulting decrease in the number of components improves the convenience of assembly and the rigidity of the apparatus.

In accordance with an aspect of the present invention, there is provided a tilt-type steering apparatus equipped with a radial fixed gear, the apparatus including a column housing enclosing a steering shaft; a mounting bracket formed on a side of the column housing; a tilt shaft formed on the column housing; a fixed gear formed on an outer peripheral surface of the mounting bracket, the fixed gear being radially formed around the tilt shaft; an adjustment bolt extending through the mounting bracket and the fixed gear; a tilt bracket coupled to the tilt shaft and to the adjustment bolt, respectively; a movable gear meshing with the fixed gear, the movable gear being coupled to an end of the adjustment bolt; an adjustment lever formed on a different end of the adjustment bolt; and a cam driven according to operation of the adjustment bolt.

### BRIEF DESCRIPTION OF THE DRAWINGS

The above and other aspects, features and advantages of the present invention will be more apparent from the following detailed description taken in conjunction with the accompanying drawings, in which:
FIG. 1 is a partial longitudinal sectional view of a tilt-type steering apparatus according to the prior art;
FIG. 2 is a perspective view of a tilt-type steering apparatus equipped with a radial fixed gear according to a preferred embodiment of the present invention;
FIG. 3 is a partially magnified view of a tilt-type steering apparatus equipped with a radial fixed gear according to a preferred embodiment of the present invention; and
FIG. 4 is a transverse sectional view of a tilt-type steering apparatus equipped with a radial fixed gear according to a preferred embodiment of the present invention.

### DETAILED DESCRIPTION OF THE EXEMPLARY EMBODIMENTS

Hereinafter, an exemplary embodiment of the present invention will be described with reference to the accompanying drawings. In the following description and drawings, the same reference numerals are used to designate the same or similar components, and so repetition of the description on the same or similar components will be omitted.

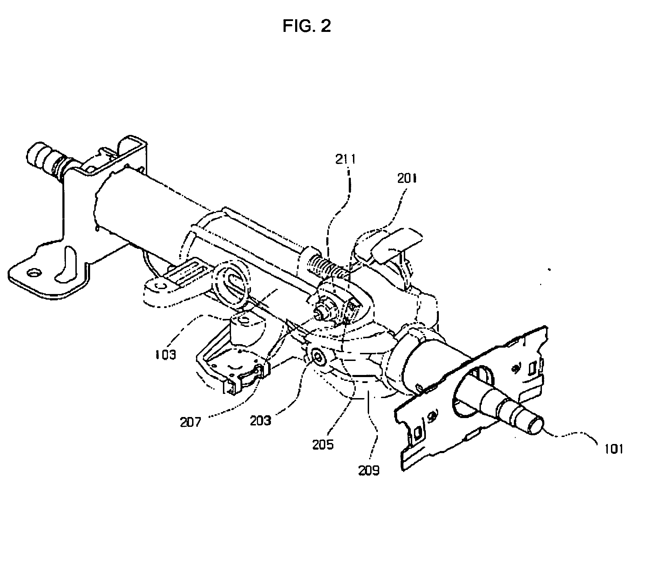

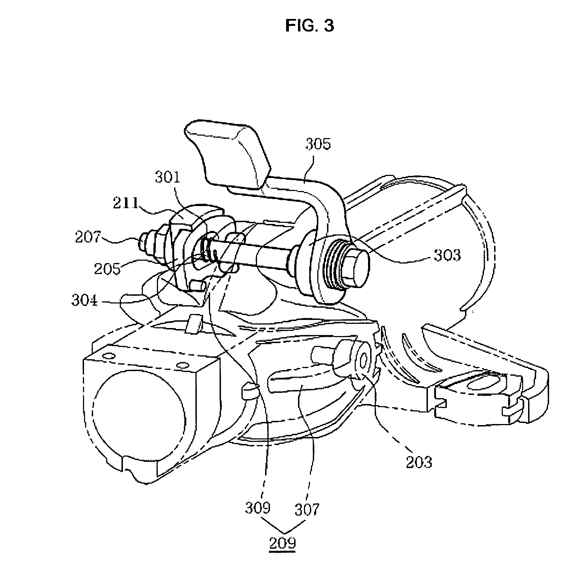

FIG. 2 is a perspective view of a tilt-type steering apparatus equipped with a radial fixed gear according to a preferred embodiment of the present invention; and FIG. 3 is a partially magnified view of a tilt-type steering apparatus equipped with a radial fixed gear according to a preferred embodiment of the present invention.

As shown in FIGs. 2 and 3, a tilt-type steering apparatus equipped with a radial fixed gear according to a preferred embodiment of the present invention includes a column housing 103 enclosing a steering shaft 101; a mounting bracket 201 formed on one side of the column housing 103; a tilt shaft 203 formed on the column housing 103; a fixed gear 205 positioned on the outer peripheral surface of the mounting bracket 201 and radially formed around the tilt shaft 203; an adjustment bolt 207 extending through the mounting bracket 201 and the fixed gear 205; a tilt bracket 209 coupled to the tilt shaft 203 and the adjustment bolt 207; and a movable gear 211 coupled to an end of the adjustment bolt 207 while meshing with the fixed gear 205.

A pair of mounting brackets 201 are formed on the outer peripheral surface of the column housing 103 while being spaced a predetermined distance from each other.

The tilt shaft 203 is inserted into both outer peripheral surfaces of the column housing 103, as well as into the tilt bracket 209. Therefore, the tilt shaft 203 acts as the center of rotation of the tilt bracket 209 during tilt operations.

The fixed gear 205 is positioned on one of the outer peripheral surfaces of the mounting bracket 201, and is radially formed around the tilt shaft 203. The fixed gear 205 has an arc-shaped long hole 301 formed around the tilt shaft 203 inside the fixed gear 205 so that the adjustment bolt 207 extends through the long hole 301. The mounting bracket 201 has a slot (not shown) formed thereon, which communicates with the long hole 301.

The adjustment bolt 207 extends through the mounting bracket 201 and the fixed gear 205 with one end coupled to the fixed gear 211 and the other end coupled to a cam 303 and an adjustment lever 305. The adjustment bolt 207 may have an elastic member 304 having both ends supported by the tilt bracket 209 and the movable gear 211, respectively. The elastic member 304 preferably consists of a coil spring, but the type is not limited to that in the present invention.

The cam 303 is driven according to rotation of the adjustment lever 305. Particularly, the adjustment bolt 207 is displaced in the axial direction according to rotation of the adjustment lever 305. In this case, the elastic member 304 is compressed or restored so that the adjustment bolt 207 can move more smoothly.

The tilt bracket 209 includes rotation portions 307 coupled to the tilt shaft 203 and an adjustment portion 309 coupled to the adjustment bolt 207. The rotation portions 307 are positioned to face each other, and are coupled to the tilt shaft 203 so as to partially enclose both outer peripheral surfaces of the column housing 103. The adjustment portion 309 extends into the mounting bracket 201 and is coupled to the adjustment bolt 207. Therefore, during tilt operations, the adjustment portion 309 rotates about the tilt shaft 203 together with the adjustment bolt 207.

The movable gear 211 is coupled to an end of the adjustment bolt 207 and is adapted to mesh with the fixed gear 205. An elastic member, such as a spring, may be positioned between the fixed and movable gears 205 and 211 so as to facilitate their movement.

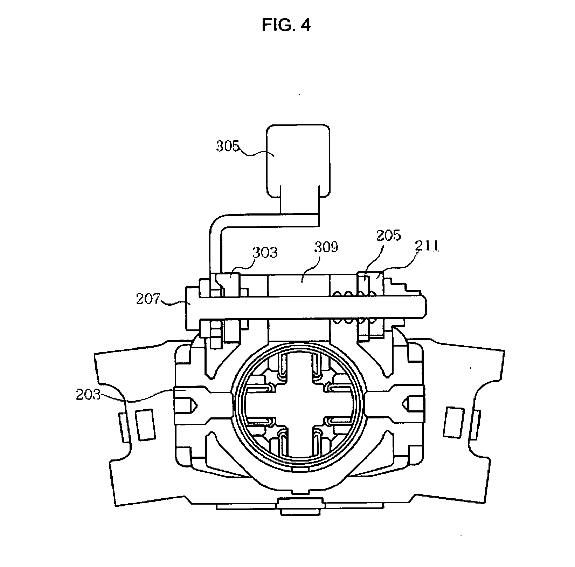

FIG. 4 is a transverse sectional view of a tilt-type steering apparatus equipped with a radial fixed gear according to a preferred embodiment of the present invention.

The operation of a tilt-type steering apparatus according to a preferred embodiment of the present invention, which is constructed as mentioned above, will now be described in more detail with reference to FIG. 4.

When the driver wants tilt adjustment, he/she rotates the adjustment lever 305 in a direction so that the cam 303 is operated. As a result, the adjustment bolt 207 is displaced in the rightward direction in FIG. 4, and the movable gear 211, which is coupled to an end of the adjustment bolt 207, is spaced from the fixed gear 205. That is, the fixed and movable gears 205 and 211 disengage from each other.

In this state, the driver can rotate the steering shaft 101 by a desired angle. The adjustment bolt 207 also tends to rotate about the tilt shaft 203, because the adjustment portion 309 of the tilt bracket 209 is coupled to the adjustment bolt 207. The fact that the long hole 301, through which the adjustment bolt 207 extends through the fixed gear 205, has the shape of an arc formed around the tilt shaft 203 ensures that the adjustment bolt 207 smoothly rotates along the inner peripheral surface of the long hole 301. As such, all of the tilt bracket 209, the adjustment bolt 207, and the movable gear 211 rotate about the tilt shaft 203.

After the steering shaft 101 is rotated by an angle desired by the user in this process, i.e. after the tilt adjustment, the driver rotates the adjustment lever 305 in a direction opposite to the direction of initial rotation. Then, the resulting driving of the cam 303 displaces the adjustment bolt 207 in the leftward direction in FIG. 4. Depending on the displacement of the adjustment bolt 207, the movable gear 211 engages with the fixed gear 205.

As mentioned above, the tilt-type steering apparatus according to the present invention is advantageous in that, since no separate components are necessary except for the fixed and movable gears, the resulting decrease in the number of components improves the convenience of assembly and maintains rigidity, even after assembly.

Although an exemplary embodiment of the present invention has been described for illustrative purposes, those skilled in the art will appreciate that various modifications, additions and substitutions are possible, without departing from the scope and spirit of the invention as disclosed in the accompanying claims.

## Claims

1. A tilt-type steering apparatus equipped with a radial fixed gear, the apparatus comprising:
a column housing enclosing a steering shaft;
a mounting bracket formed on a side of the column housing;
a tilt shaft formed on the column housing;
a fixed gear formed on an outer peripheral surface of the mounting bracket, the fixed gear being radially formed around the tilt shaft;
an adjustment bolt extending through the mounting bracket and the fixed gear;
a tilt bracket coupled to the tilt shaft and to the adjustment bolt, respectively;
a movable gear meshing with the fixed gear, the movable gear being coupled to an end of the adjustment bolt;
an adjustment lever formed on a different end of the adjustment bolt; and
a cam driven according to operation of the adjustment bolt.

2. The apparatus as claimed in claim 1, wherein a long hole is formed in an arc shape around the tilt shaft inside the fixed gear, and the adjustment bolt extends through the long hole.

3. The apparatus as claimed in claim 2, wherein the adjustment bolt extends in parallel with the tilt shaft.

4. The apparatus as claimed in claim 3, wherein the adjustment bolt has a first elastic member having both ends supported by the movable gear and the tilt bracket, respectively.

5. The apparatus as claimed in one of claims 1-4, wherein a second elastic member is positioned between the movable gear and the fixed gear.
